# EUROPÄISCHE PATENTANMELDUNG

(11) **EP 2 784 099 A1**
(43) Veröffentlichungstag der Anmeldung: **01.10.2014**
(21) Anmeldenummer: 13160923.2
(22) Anmeldetag: 25.03.2013
(51) Int. Cl.: C08G 18/48, B32B 5/18, B32B 27/40, C08G 18/66

(54) **Schallabsorbierender Werkstoffverbund und dessen Verwendung**

(71) Anmelder: Bayer MaterialScience AG, 51373 Leverkusen (DE)
(72) Erfinder: Albach, Rolf, 51061 Köln (DE); Beaujean, Joern, 51375 Leverkusen (DE)
(74) Vertreter: BIP Patents

(57) **Zusammenfassung**

Die vorliegende Erfindung betrifft Verbundelemente aus einer Schicht aus offenzelligem, hartem, Isocyanat-basiertem Schaumstoff und mindestens einer weiteren Schicht aus Isocyanat-basiertem Schaumstoff und deren Verwendung zur Schallabsorption.

## Beschreibung

Die vorliegende Erfindung betrifft Verbundelemente aus einer Schicht aus offenzelligem, hartem, Isocyanat-basiertem Schaumstoff und mindestens einer weiteren Schicht aus Isocyanat-basiertem Schaumstoff und deren Verwendung zur Schallabsorption.

Zur Verringerung von Umgebungslärm in Innenräumen werden heute häufig schallabsorbierende Wände eingesetzt. Hierzu werden derzeit Faservliese oder Weichschaumstoffe, oft auch als Multilagen-Aufbau, eingesetzt, die häufig nicht selbsttragend sind und von einem inneren oder äußeren Gerüst fixiert werden. Die Firma Silence Solutions bietet solche schallabsorbierenden Stellwände an (DE-A 102007000568).

Ein Gerüst führt zusätzlich zu erheblichem Gewicht. In Masse-Feder-Systemen wird eine leichte und weiche Lage (auch Schicht genannt) mit einer schwereren, härteren und nicht porösen Lage kombiniert, die ebenfalls entsprechend schwere Aufbauten bilden.

Alternativ sind auch offenzellige, leichtgewichtige Hartschaumstoffe auf Basis von Harnstoff und Formaldehyd bekannt, deren Herstellung jedoch aufwändig ist, da die Emissionen von Formaldehyd in die Innenraumluft minimiert werden müssen. Das Erreichen niedriger Formaldehyd-Emissionen ist beispielsweise bei Verwendung von Polyurethan erheblich einfacher.

Kraftwagen enthalten im Dachhimmel oft Polyurethanschaumstoffe verschiedener Dichte und Härte, gestützt von Glasfaser-Polyharnstoff-Verbunden.

Weiterhin bekannt sind Kombinationen aus verschiedenen Materialien zur Herstellung von akustisch aktiven Werkstoffverbunden.

JP-A 2010184655 beschreibt zweilagige Materialverbunde. Davon ist eine Lage ein offenzelliger Polyurethan-Hart- oder -Weichschaumstoff auf Basis von Polyesterpolyol mit Absorptionsmaximum nach JIS A 1405-1 im Bereich von 500-1000 Hz. Die zweite Lage ist ein Schaumstoff auf Basis Polystyrol-, Phenol-, Urethan- und/oder Melaminharz mit einer Luftdurchlässigkeit von 100 ml/cm²/s.

JP-A 2005193612 beschreibt einen Integralhartschaum als dreilagigen Aufbau aus zwei Schwerschichten mit 100-300 kg/m³und einem Kern aus Polyurethanhartschaumstoff mit einer Dichte von 10-70 kg/m³. Eine der schweren Decklagen muss mit zusätzlichem Aufwand nachträglich gelocht werden, um gute akustische Absorption zu erhalten.

JP-A 2009226675 beschreibt einen zweilagigen Schallabsorber aus Schaumstoff und direkt angeschäumtem Faservlies. Das Anschäumen von Faservlies ist ein technisch sehr anspruchsvoller Prozess.

JP-A 2005352036 beschreibt einen dreilagigen Schallabsorber aus drei Schaumstoffen, wobei der erste Schaumstoff eine Dichte von 60-130 kg/m³, einen Young-Modul von 1,5-3,5 10⁵ N/m² und einen Lufströmungswiderstand von 1000-8000 Ns/m³ aufweist, der zweite eine Dichte von 45-80 kg/m³ und einen Young-Modul von 1-10 10⁵ N/m² aufweist und der dritte eine Dichte von 100-200 kg/m³ und einen Luftströmungswiderstand von 800-6000 Ns/m³aufweist.

Aufgabe war es, schallabsorbierende und besonders steife Werkstoffverbunde zur Verfügung zu stellen, mit denen der Umgebungslärm in Innenräumen verringert werden kann, so dass lärmbedingte Beeinträchtigungen von Gesundheit und Wohlbefinden minimiert werden.

Überraschend wurde gefunden, dass diese Aufgabe mit einem Verbundelement enthaltend mindestens zwei Schaumstoffschichten auf Basis von Isocyanaten mit verschiedenen Härten gelöst werden kann.

Gegenstand der Erfindung sind Verbundelemente, welche mindestens zwei Schichten aus verschiedenen Isocyanat-basierten Schaumstoffen aufweisen, die jeweils eine Dichte von ≤ 130 kg/m³, bevorzugt ≤ 100 kg/m³, gemäß DIN 53420 und jeweils eine Druckfestigkeit bei 10% Stauchung von 5 bis 200 kPa gemäß DIN EN 826 aufweisen, wobei die Dichten und Druckfestigkeiten der mindestens zwei Schichten unterschiedlich sind, mit mindestens einer der mindestens zwei Schichten mit einer Reißdehnung von größer 30% gemäß DIN 53430, und die jeweils im Mittel 75 bis 98% offene Zellen gemäß DIN ISO 4590-86 aufweisen, und welche gegebenenfalls eine adhäsive Verbindungsschicht zwischen den mindestens zwei Schichten aufweisen, wobei
A) mindestens eine der mindestens zwei Schaumstoffschichten mindestens 5 mm dick ist, aus einem irreversibel thermoformbaren, harten Isocyanat basierten Schaumstoff mit einer Dichte nach DIN 53420 von 10-45 kg/m³, bevorzugt von 15-30 kg/m³, und einer Druckfestigkeit bei 10% Stauchung nach DIN EN 826 von 30-200 kPa besteht, wobei die Schaumstoffschicht A) erhältlich ist aus der Reaktion der Komponenten bestehend aus
   i) einer Polyolkomponente bestehend aus
      a. 15-60 Gew.-%, bezogen auf die Gesamtmenge der Isocyanat-reaktiven Komponenten der Polyolkomponente i), Polyetherpolyol mit 10-50 Gew.-% Ethylenoxid-Anteil, mit einem zahlenmittleren Äquivalentgewicht von 500-2500 g/mol und einer Funktionalität von 2 bis 8, bevorzugt 2 bis 6,
      b. 30-70 Gew.%, bezogen auf die Gesamtmenge der Isocyanat-reaktiven Komponenten der Polyolkomponente i), Polyetherpolyol mit einem zahlenmittleren Äquivalentgewicht von 50-480 g/mol und einer Funktionalität von 2 bis 8, bevorzugt von 2 bis 6,
      c. gegebenenfalls Kettenverlängerern und/oder Vernetzungsmitteln,
      d. 1 bis 15 Gew.-%, bezogen auf die Gesamtmenge der Isocyanat-reaktiven Komponenten der Polyolkomponente i),Wasser und gegebenenfalls weiteren Treibmitteln,
      e. 0,3 bis 5 Gew.-%, bezogen auf die Gesamtmenge der Isocyanat-reaktiven Komponenten der Polyolkomponente i), Katalysatoren,
      f. gegebenenfalls Hilfs- und/oder Zusatzstoffen,
   ii) und einer Isocyanatkomponente enthaltend
      g. 55 bis 100 Gew.-%, bevorzugt 60 bis 80 Gew.-%, bezogen auf die Isocyanatkomponente ii), difunktionelle Diphenylmethandiisocyanate (MDI) mit einem Isomeren-Gewichtsverhältnis von 4,4'-MDI zu 2,4'-MDI von 1:1 bis 7:1, bevorzugt von 2:1 bis 3:1,
      h. 0 bis 45 Gew.-%, bevorzugt 20 bis 40 Gew.-%, bezogen au die Isocyanatkomponente ii), höhere Homologe des Diphenylmethandiisocyanates (MDI),
B) die mindestens zwei Schaumstoffschichten nach ISO 10543 im Bereich von 315-6350 Hz jeweils bei 1 cm Schichtdicke mindestens eine mittlere Schallabsorption von 20% aufweisen.

Besonders bevorzugt weisen beide der mindestens zwei Schichten eine Dicke von mindestens 5mm auf.

In einer bevorzugten Ausführung werden ein harter Schaumstoff A) mit einer Stauchhärte bei 10% Stauchung (nach DIN EN 826) von 30 bis 200 kPa als eine Schicht und ein weicher Schaumstoff mit einer Stauchhärte bei 40% Stauchung von 0,5 bis 50 kPa (gemäß ISO 3386-1-98) als zweite Schicht kombiniert. Bei einer Dicke der beiden vorgenannten Schichten im Verbund von je 5 mm, weist der Verbund bereits eine ausreichende akustische Effizienz auf.

In einer besonders bevorzugten Ausführung sind beide Schichten Isocyanat-basierte Schaumstoffe mit einer Dichte nach DIN 53420 von 10 bis 45 kg/m³, bevorzugt 15 bis 24 kg/m³, wobei eine Schicht eine Druckfestigkeit bei 10% Stauchung nach DIN EN 826 von 60 bis 200 kPa aufweist und wobei sich die Dichte zur Schaumstoffschicht A) um 3 bis 20 kg/m³ unterscheidet.

Bevorzugt werden die erfindungsgemäßen Verbundelemente so hergestellt, dass eine oder auch mehrere Schaumstoffschicht(en) A) an der Wand einer Form fixiert werden. Dann wird in die offene oder geschlossene Form eine Mischung aus einer Polyolkomponente und einer Isocyanatkomponente eingebracht. Die Form wird gegebenenfalls geschlossen und die Mischung in der Form zu einer Schaumstoffschicht ausgehärtet.

Die erfindungsgemäßen Verbundelemente werden insbesondere zur Herstellung von schallabsorbierenden Paneelen verwendet, die keine externen Rahmen zur Stabilisierung benötigen. Dies ist besonders bei Gewichts-sensiblen mobilen Anwendungen, wie z.B. in Fahrzeugen, von erheblicher Bedeutung.

Als Komponente a. werden zwei- bis achtfunktionelle Ethylenoxid-haltige Polyoxyalkylenpolyole mit einem Äquivalentgewicht von 500-2500 g/mol verwendet, die vorzugsweise durch Umsetzung von Ethylenoxid und/oder Propylenoxid mit zwei- bis achtfunktionellen Startermolekülen, wie z.B. Glycerin, Trimethylolpropan, Ethylenglycol, Wasser, 1,2-Propylenglycol, Neopentylglycol, Bisphenol-A, Bisphenol-F, Tetrabrombisphenol-A, Sorbit Saccharose- und anderen Startern zugänglich sind.

Als Komponente b. werden zwei- bis achtfunktionelle, bevorzugt zwei- bis sechsfunktionelle, besonders bevorzugt zwei- bis dreifunktionelle Polyoxyalkylenpolyole mit einem Äquivalentgewicht von 50-480 g/mol verwendet, die vorzugsweise durch Umsetzung von Ethylenoxid und/oder Propylenoxid mit Startern, wie z.B. Glycerin, Trimethylolpropan, Propandiolen, Ethandiol, Triethanolamin, Ethylendiamin, alkyliertem Diaminobenzol, Mischungen aus Zucker und/oder Sorbit mit Glycolen, dem Halbester von Phthalsäure mit Glycolen und anderen zugänglich sind.

Als Komponente c. können die aus der Polyurethanchemie an sich bekannten Verbindungen eingesetzt werden, wie beispielsweise Glyzerin, Butandiol, Ethylenglycol, Diethylenglycol, Isosorbit, Triethanolamin und Diethanolamin.

Als weitere Treibmittel unter d. können insbesondere physikalische Treibmittel, Ameisensäure und Formiate verwendet werden.

Zu den Katalysatoren e. gehören Verbindungen, die die Reaktion beschleunigen. In Betracht kommen organische Metallverbindungen, vorzugsweise organische Zinnverbindungen, wie Zinn(II)-salze von organischen Carbonsäuren, beispielsweise Zinn(II)-acetat, Zinn(II)-octoat, Zinn(II)-ethyl-hexanoat, Zinn(II)-laurat und die Dialkylzinn(IV)-salze von organischen Carbonsäuren, beispielsweise Dibutylzinndiacetat, Dibutylzinndilaurat, Dibutylzinnmaleat, Dioctylzinndiacetat, Wismut- und Zinksalze, sowie tertiäre Amine wie Triethylamin, Tributylamin, Dimethylcyclohexylamin, Dimethylbenzylamin, N-Methyl-imidazol, N-Methyl-, N-Ethyl-, N-Cyclohexylmorpholin, N,N,N',N'-Tetramethylethylendiamin, N,N,N',N'-Tetramethylbutylendiamin, N,N,N',N'-Tetramethyl-hexylendiamin-1,6, Pentamethyldiethylentriamin, Tetramethyl-diaminoethylether, Bis-(dimethylaminopropyl)-harnstoff, Dimethylpiperazin, 1,2-Dimethylimidazol, 1-Aza-bicyclo-[3,3,0]-octan, 1,4-Diaza-bicyclo-[2,2,2]-octan, und Alkanolaminverbindungen wie Triethanolamin, Tris-isopropanolamin, N-Methyl- und N-Ethyl-diethanolamin und Dimethylethanolamin sowie die entsprechenden Aminoxide. Als Katalysatoren kommen weiter in Betracht: Tris-(dialkylamino)-s-hexahydrotriazine, insbesondere Tris-(N,N-dimethylamino)-s-hexahydrotriazin, Tetraalkylammoniumsalze wie beispielsweise N,N,N-Trimethyl-N-(2-hydroxy-propyl)-formiat, N,N,N-Trimethyl-N-(2-hydroxy-propyl)-2-ethyl-hexanoat, Tetraalkyl-ammoniumhydroxide wie Tetramethylammoniumhydroxid, Alkalihydroxide wie Natriumhydroxid, Alkalialkoholate wie Natriummethylat und Kaliumisopropylat, sowie Alkali- oder Erdalkalisalze von Fettsäuren mit 1 bis 20 C-Atomen und gegebenenfalls seitenständigen OH-Gruppen.

Als Katalysatoren e. werden bevorzugt auch gegenüber Isocyanaten reaktionsfähige tertiäre Amine wie beispielsweise N,N-Dimethylaminopropylamin, Bis-(Dimethylaminopropyl)-amin, N,N-Dimethylaminopropyl-N'-methyl-ethanolamin, Dimethylaminoethoxyethanol, Bis-(Dimethylaminopropyl)amino-2-propanol, N,N-Dimethylaminopropyl-dipropanolamin, N,N,N'-Trimethyl-N'-hydroxyethyl-bisaminoethylether, N,N-Dimethylaminopropylharnstoff, N-(2-Hydroxypropyl)-imidazol, N-(2-Hydroxyethyl)-imidazol, N-(2-Aminopropyl)-imidazol, 2-((Dimethylamino)ethyl)methylaminopropanol, 1,1'-((3-(Dimethylamino)propyl)imino)bis-2-propanol und/oder die in EP-A 0 629 607 beschriebenen Umsetzungsprodukte aus Acetessigsäureethylester, Polyetherpolyolen und 1-(Dimethylamino)-3-amino-propan verwendet.

Typische Hilfs- und/oder Zusatzstoffe f. für die Herstellung von Isocyanatbasierten Schaumstoffen sind Schaumstabilisatoren, Emulgatoren, Farbmittel, Flammschutzmittel und Zellöffner.

Als Emulgatoren seien beispielsweise ethoxylierte Alkylphenole, Alkalimetallsalze von Fettsäuren, Betaine, Alkalimetallsalze von sulfatierten Fettsäuren, Alkalimetallsalze von Sulfonsäuren und Salze von Fettsäuren und Aminen genannt.

Als Schaumstabilisatoren eignen sich beispielsweise Siloxan-Polyoxyalkylen-Copolymere, Organopolysiloxane, ethoxylierte Fettalkohole und Alkylphenole, Fettsäure-basierte Aminoxide und Betaine, und Ricinusöl bzw. Ricinolsäureester.

Als Zellöffner wirken beispielweise Paraffine, Polybutadiene, Fettalkohole und gegebenenfalls Polyalkylenoxid-modifizierte Dimethylpolysiloxane.

Weitere Beispiele von gegebenenfalls zu verwendenden Hilfs- und/oder Zusatzmitteln f. sind Reaktionsverzögerer, Stabilisatoren gegen Alterungs- und Witterungseinflüsse, Weichmacher, anorganische flammhemmende Substanzen, gegebenenfalls modifizierte Russe, Graphite und weitere Kohlenstoffe, phosphor- und/oder halogenhaltige organische Flammschutzmittel, fungistatisch und bakteriostatisch wirksame Substanzen, Pigmente und Farbstoffe sowie die an sich bekannten üblichen organischen und anorganischen Füllstoffe.

Nähere Angaben über Verwendungs- und Wirkungsweise der oben genannten Hilfs- und/oder Zusatzmittel sind z.B. im Kunststoff-Handbuch, Polyurethane, Band VII, Carl Hanser Verlag, München, Wien, 2. Auflage, 1983beschrieben.

Zusätzlich können in der Isocyanatkomponente ii) bei Raumtemperatur flüssige Di- und/oder Polyisocyanate der Diphenylmethanreihe eingesetzt werden. Hierzu gehören bei Raumtemperatur flüssige und gegebenenfalls entsprechend modifizierte Gemische aus 4,4'-DÜsocyanatodiphenylmethan, 2,4'- und gegebenenfalls 2,2'-Diisocyanatodiphenylmethan. Gut geeignet sind auch bei Raumtemperatur flüssige Polyisocyanatgemische der Diphenylmethanreihe, die neben den genannten Isomeren deren höheren Homologe enthalten und die in an sich bekannter Weise durch Phosgenierung von Anilin/Formaldehyd-Kondensaten zugänglich sind. Auch Urethan- und/oder Carbodiimid/Uretdiongruppen aufweisende Modifizierungsprodukte dieser Di- und Polyisocyanate sind geeignet. Allophanat- bzw. Biuretgruppen aufweisende Modifizierungsprodukte der genannten Di- und Polyisocyanate sind ebenfalls geeignet. In untergeordneten Mengen können weitere aliphatische, cycloaliphatische oder aromatische Polyisocyanate in der Komponente ii) enthalten sein.

Die Isocyanatkomponente (ii) weist vorzugsweise eine mittlere NCO-Funktionalität von 2,1 bis 5,0, vorzugsweise 2,5 bis 3,1 auf.

Die Erfindung soll anhand der nachfolgenden Beispiele näher erläutert werden.

### Beispiele:

### Beispiel I: Herstellung des Schaumstoffes A

Schaumstoff A wurde hergestellt, indem zunächst in einem Papierbecher von 0,66 dm³ Volumen eine Mischung aus 61,86 Gewichtsteilen Glyzerin-gestartetes Ethylenoxid-terminiertes Polypropylenoxid (6000 g/mol), 0,83 Gewichtsteilen Glyzerin-gestartetes Ethylenoxid-terminiertes Polypropylenoxid (4550 g/mol), 0,29 Gewichtsteilen Diethanolamin, 0,54 Gewichtsteilen Glyzerin, 1,68 Gewichtsteilen Wasser, 0,17 Gewichtsteilen Tegostab B8734LF2, 0,13 Gewichtsteilen Tegocolor Black HI und 1,08 Gewichtsteilen PC CAT NP712 zehn Sekunden bei 200 Hz mit einem Pendraulikrührer (6,5 cm Rührtellerdurchmesser) gemischt und mit Luft beladen wurden. Anschließend wurden 32,75 Gewichtsteile einer Mischung aus 2,4'-MDI, 4,4'-MDI, dem Biuret des 4,4'-MDI und höheren MDI-Homologen zugegeben. Die Mischung wurde mit dem gleichen Rührer für 5 Sekunden bei 700 Hz vermischt. Der Schaum begann 5 Sekunden nach Zugabe des Isocyanates und Beginn der Vermischung zu steigen. Der Schaum stieg für weitere 50 Sekunden. Nach Aushärten des Schaumstoffes wurde die Kuppe am Becherrand mit einem Messer abgeschnitten. Nach Abzug des Gewichts des Bechers befanden sich 28,4 Gramm Schaumstoff in 0,66 dm³ Bechervolumen. Dies entspricht einer Dichte von 43 kg/m³. Für die Herstellung der Schaumstoffscheiben für die akustischen Messungen wurden analog der oben angegebenen Rezeptur 208 Gramm der Polyol-Isocyanat-Mischung in eine Aluminiumform von 2*2*0,4 m³ Volumen eingefüllt. Nach Verriegeln des Deckels härtete der Schaumstoff in der Form für 2 Minuten aus. Die Prüfkörper für die akustischen Messungen wurden aus dem Kern der Schaumstoffplatte herausgeschnitten. Die Dichte des Schaumstoffs im Kern (DIN53420) beträgt 120 Gramm/dm³. Die Zugfestigkeit beträgt 315 kPa, die Reissdehnung 87% (ISO 1798). Die Stauchhärte bei 40% Stauchung beträgt 30 kPa (ISO 3386-1-98).

### Beispiel II: Herstellung des Schaumstoffes B

Schaumstoff B wurde hergestellt, indem zunächst in einem Papierbecher mit Blechboden von 0,93 dm³ Volumen eine Mischung aus 7,7 Gewichtsteilen Glyzerin-gestartetes Ethylenoxid-terminiertes Polypropylenoxid (6000 g/mol), 14,64 Gewichtsteilen Ethylenoxid-terminiertes Propylenglycol-gestartetes Polypropylenoxid (4000 g/mol), 3,85 Gewichtsteilen Propylenglycol-gestartetes Ethylenoxid-terminiertes Polypropylenoxid (2000 g/mol), 3,78 Gewichtsteilen ortho-Toluylendiamin-gestartetes Ethylenoxid-terminiertes Polypropylenoxid (490 g/mol), ), 1,63 Gewichtsteilen Ethylendiamin-gestartetes Polypropylenoxid (350 g/mol), 3,63 Gewichtsteilen Wasser, 0,54 Gewichtsteilen Ortegol 501, 0,18 Gewichtsteilen Tegostab B8870, 0,18 Gewichtsteilen Isopur Schwarzpaste N und 0,73 Gewichtsteile Katalysator Desmorapid 59IF08 zehn Sekunden bei 200 Hz mit einem Pendraulikrührer (6,5 cm Rührtellerdurchmesser) gemischt und mit Luft beladen wurden. Anschließend wurden 63,13 Gewichtsteile einer Mischung aus 2,4`-MDI, 4,4'-MDI und höheren MDI-Homologen (Gewichtsverhältnis 23:51:26) zugegeben. Die Mischung wurde mit dem gleichen Rührer für 10 Sekunden bei 700 Hz vermischt und in eine mit Teflonfolie ausgekleidete Holzkiste mit einem Volumen von 3*3*3 dm³ gegossen. 140 Sekunden nach Zugabe des Isocyanates und Beginn der Vermischung konnte man mit einem Streichholz erstmals aus dem Schaumstoff Fäden ziehen. Man entformte nach weiteren zwei Minuten und ließ den Schaumstoff 24 Stunden ruhen. Dann schnitt man aus dem Kern einen Würfel von 1 dm Kantenlänge. Der Würfel wiegt 17 Gramm. Dies entspricht einer Dichte von 17 kg/m³. Die Prüfkörper für die akustischen Messungen wurden aus dem Schaumstoff in der Mitte oberhalb des zentralen, für die Rohdichtebestimmung genutzten Würfels herausgeschnitten. Die Zugfestigkeit beträgt 97 kPa, die Reissdehnung 20% (DIN 53430). Die Stauchhärte beträgt 64kPa (EN 826). Die Offenzelligkeit beträgt 95% (DIN ISO 4590-86).

### Beispiel III: Herstellung des Schaumstoffes C

Schaumstoff C wurde hergestellt, indem zunächst in einem Papierbecher mit Blechboden von 0,93 dm³ Volumen eine Mischung aus 12,09 Gewichtsteilen Glyzerin/Sorbitol-co-gestartetes Polypropylenoxid mit Ethylenoxidkappe (6000 g/mol), 3,84 Gewichtsteilen Polypropylenglycol (400 g/mol), 15,93 Gewichtsteilen Glyzerin-gestartetes Polypropylenoxid (510 g/mol), 2,3 Gewichtsteilen Glyzerin, 2,5 Gewichtsteilen Wasser, 0,58 Gewichtsteilen Polyurax SR272, 0,19 Gewichtsteilen Isopur-Schwarzpaste N, 1,15 Gewichtsteilen eines Umsetzungsproduktes aus Ölsäure und Dimethylaminopropylamin (molares Verhältnis 1:1) 10 Sekunden bei 200 Hz mit einem Pendraulikrührer (6,5 cm Rührtellerdurchmesser) gemischt und mit Luft beladen wurden. Anschließend wurden 61,42 Gewichtsteile einer Mischung aus 2,4'-MDI, 4,4'-MDI und höheren MDI-Homologen (Gewichtsverhältnis 23:51:26) zugegeben. Die Mischung wurde mit dem gleichen Rührer für 10 Sekunden bei 700 Hz vermischt und in eine mit Teflonfolie ausgekleidete Holzkiste mit einem Volumen von 3*3*3 dm³ gegossen. Man entformte nach fünf Minuten und ließ den Schaumstoff 24 Stunden ruhen. Dann schnitt man aus dem Kern einen Würfel von 1 dm Kantenlänge. Der Würfel wiegt 24 Gramm. Dies entspricht einer Dichte von 24 kg/m³. Die Prüfkörper für die akustischen Messungen wurden aus dem Kern des Schaumstoffs oben, mittig und unten herausgeschnitten. Angegebene Werte sind Mittelwerte aus diesen drei Platten. Die Zugfestigkeit beträgt 115 kPa, die Reissdehnung 14% (DIN 53430). Die Stauchhärte beträgt 96 kPa (EN 826). Die Offenzelligkeit beträgt 84% (DIN ISO 4590-86).

### Beispiel IV: Herstellung des Schaumstoffes D

Schaumstoff D wurde hergestellt, indem zunächst in einem Papierbecher von 0,66 dm³ Volumen eine Mischung aus 62,8 Gewichtsteilen Glyzerin-gestartetes Ethylenoxid-terminiertes

Polypropylenoxid (6200 g/mol), 0,33 Gewichtsteilen Glyzerin, 2,33 Gewichtsteilen Wasser, 0,5 Gewichtsteilen Tegostab B8734LF2, 0,13 Gewichtsteilen Tegocolor Black HI, 0,27 Gewichtsteilen Jeffcat DMAPA und 0,27 Gewichtsteilen PC CAT NP712 10 Sekunden bei 200 Hz mit einem Pendraulikrührer (6,5 cm Rührtellerdurchmesser) gemischt und mit Luft beladen wurde. Anschließend wurden 33,7 Gewichtsteile einer Mischung aus 2,4`-MDI, 4,4`-MDI, dem Biuret des 4,4'-MDI und höheren MDI-Homologen (1:68:20:11) zugegeben. Die Mischung wurde mit dem gleichen Rührer für 5 Sekunden bei 700 Hz vermischt. Der Schaum begann 13 Sekunden nach Zugabe des Isocyanates und Beginn der Vermischung zu steigen. Der Schaum stieg für weitere 54 Sekunden. Nach Aushärten des Schaumstoffes wurde die Kuppe am Becherrand mit einem Messer abgeschnitten. Nach Abzug des Gewichts des Bechers befanden sich 38,9 Gramm Schaumstoff in 0,66 dm³ Bechervolumen. Dies entspricht einer Dichte von 59 kg/m³.

Für die Herstellung der Schaumstoffscheiben für die akustischen Messungen wurden analog der oben angegebenen Rezeptur 106 Gramm der Polyol-Isocyanat-Mischung in eine Aluminiumform von 2*2*0,4 m³ Volumen eingefüllt. Nach Verriegeln des Deckels härtete der Schaumstoff in der Form für 2 Minuten aus. Die Prüfkörper für die akustischen Messungen wurden aus dem Kern der Schaumstoffplatte herausgeschnitten. Die Dichte des Schaumstoffs im Kern (DIN53420) beträgt 64 Gramm/dm³. Die Zugfestigkeit beträgt 223 kPa, die Reissdehnung 150% (ISO 1798). Die Stauchhärte bei 40% Stauchung beträgt 9 kPa (ISO 3386-1-98).

Aus den hergestellten Schaumstoffen A, B, C, D und E wurden Verbundelemente ohne Klebschicht durch mechanisches Klammern hergestellt (Beispiele 1 bis 13; siehe Tabelle 1).

### Beispiel V: Herstellung des Schaumstoffes E und der Verbundelemente (Beispiele 14 bis 16; siehe Tabelle 1) aus Schaumstoff E mit Schaumstoff C

Schaumstoff E wurde hergestellt, indem eine Mischung aus 60,23 Gewichtsteilen Propylenglycol-gestartetes Ethylenoxid-terminiertes Polypropylenoxid (6200 g/mol), 0,49 Gewichtsteilen Diethanolamin, 2,42 Gewichtsteilen Wasser, 0,2 Gewichtsteilen Tegostab B8734LF2, 0,2 Gewichtsteilen Isopur Schwarzpaste N, 1,96 Gewichtsteilen Mesamoll, 0,16 Gewichtsteilen Jeffcat ZF10, 0,68 Gewichtsteilen Dimethylaminohexanol und 0,04 Gewichtsteilen Dabco NE300, 10 Sekunden bei 200 Hz mit einem Pendraulikrührer (6,5 cm Rührtellerdurchmesser) gemischt und mit Luft beladen wurden. Anschließend wurden 33,45 Gewichtsteile einer Mischung aus 2,4`-MDI, 4,4'-MDI und höheren MDI-Homologen zugegeben. Die Mischung wurde mit dem gleichen Rührer für 5 Sekunden bei 700 Hz vermischt. Die Mischung wurde in eine temperierte Klappdeckelform von 1,6 dm³ Volumen eingefüllt, in die zuvor eine 10 mm dicke Schaumstoffplatte vom Typ C in den Boden oder Deckel fixiert wurde. Die jeweils eingelegte Schaumstoffplatte wurde in einem Fall befeuchtet. Nach drei Minuten wurde die Form geöffnet.

Die Prüfkörper für die akustischen Messungen wurden aus dem Verbund so herausgeschnitten, dass 5 mm Schaumstoff Typ C und 5 mm Schaumstoff vom Typ E entstanden. Aus dem überschüssigen Schaumstoff vom Typ E wurden Prüfmuster zur Bestimmung der mechanischen Eigenschaften geschnitten. Die Dichte des Schaumstoffs im Kern (DIN53420) beträgt 53 Gramm/dm³. Die Zugfestigkeit beträgt 141kPa, die Reissdehnung 135% (ISO 1798). Die Stauchhärte bei 40% Stauchung beträgt 4 kPa (ISO 3386-1-98).

Die Eigenschaften der Verbundelemente und deren Aufbau können der folgenden Tabelle 1 entnommen werden.

**Tabelle 1**

| Beispiele | Der Schallquelle abgewandter Schaumstoff | Der Schallquelle zugewandter Schaumstoff | Mittlere Schaumstoffdichte (kg/m³) | Mittlere Absorption 315-6350 Hz ISO 10543 | Mittlere Absorption 315-630 Hz ISO 10543 | Max. Absorption ISO 10543 |
|---|---|---|---|---|---|---|
| Schichtdicke | 5 mm | 5 mm | | | | |
| 1* | A | A | 120 | 38% | 11% | 69% (6350 Hz) |
| | | | | | | 41% (1600 Hz) |
| 2* | B | B | 17 | 22% | 10% | 52% (6350 Hz) |
| | | | | | | 27% (3150 Hz) |
| 3* | C | C | 24 | 36% | 6% | 74% (6350 Hz) |
| | | | | | | 42% (1600 Hz) |
| 4* | D | D | 64 | 36% | 7% | 97% (5000 Hz) |
| | | | | | | 62% (3150 Hz) |
| 5* | E | E | 54 | 28% | 5% | 89% (6350 Hz) |
| 6 | A | C | 72 | 28% | 14% | 66% (1600 Hz) |
| 7 | C | A | 72 | 39% | 10% | 89% (6350 Hz) |
| 8 | C | D | 44 | 48% | 9% | 97% (3150 Hz) |
| 9 | D | C | 44 | 38% | 8% | 99% (6350 Hz) |
| 10 | B | C | 21 | 32% | 16% | 64% (3150 Hz) |
| 11 | C | B | 21 | 43% | 11% | 93% (4000 Hz) |
| 12 | B | D | 40 | 37% | 16% | 68% (5000 Hz) |
| 13 | D | B | 40 | 35% | 10% | 89% (6350 Hz) |
| 14 | E | C | 39 | 41% | 12% | 75% (2500 Hz) |
| | | (im Deckel) | | | | |
| 15 | E | C | 39 | 41% | 12% | 72% (4000 Hz) |
| | | (im Deckel, angefeuchtet) | | | | |
| 16 | E | C | 39 | 35% | 9% | 79% (6350 Hz) |
| | | (im Boden) | | | | |

| | | | | | | |
|---|---|---|---|---|---|---|
| *Vergleichsbeispiele | | | | | | |

Die Beispiele 8 und 9 (Kombinationen CD, DC) zeigen, dass die Kombination eines Hartschaumstoffs niedriger Dichte (Schaumstoff C) mit einem Hartschaumstoff sehr niedriger Dichte (Schaumstoff D) generell eine Verbesserung der Schallabsorption bewirken, auch wenn die Differenz der Dichten nur 7 kg/m³ beträgt.

Die Beispiele 7 und 11 (Kombinationen CA, CB) zeigen, dass die Kombination aus einem Hartschaumstoff niedriger Dichte (Schaumstoff C) auf der lärmabgewandten Seite und einem anderen offenzelligen Schaumstoff eine generelle Verstärkung der Lärmabsorption ergeben. Dies gilt auch, wenn statt des Hartschaumstoffs niedriger Dichte (Schaumstoff C) ein besonders leichter Schaumstoff D eingesetzt wird. Bei einer Kombination BD wird ganz besonders die Schallabsorption im niederfrequenten Bereich verbessert. Beim Verfahren der Direktanschäumung (Beispiele 14, 15) wird auch dann, wenn der Hartschaumstoff niedriger Rohdichte (Schaumstoff C) auf der lärmzugewandten Seite und der Weichschaumstoff auf der lärmabgewandten Seite platziert wird, eine generelle Verstärkung der Absorption erreicht.

Beispiel 6 und 10 (Kombinationen AC, BC) zeigen, dass die Kombination aus einem Weichschaumstoff und einem Hartschaumstoff niedriger Dichte auf der lärmzugewandten Seite eine Verbesserung im niederfrequenten Bereich bewirkt.

Die Beispiele 8, 10, 11, 12, 14 und 15 zeigen, dass man auch durch Schaumstoffkombinationen überraschend selektiv bei bestimmten Frequenzen besonders hohe Absorptionen im Sinne einer selektiven Filterfunktion erhalten kann.

## Patentansprüche

1. Verbundelemente, welche mindestens zwei jeweils mindestens 5 mm dicke Schichten aus verschiedenen Isocyanat-basierten Schaumstoffen aufweisen, die jeweils eine Dichte von ≤ 130 kg/m³ gemäß DIN 53420 und jeweils eine Druckfestigkeit von 5 bis 200 kPa bei 10% Stauchung gemäß DIN EN 826 aufweisen, wobei die Dichten und Druckfestigkeiten der mindestens zwei Schichten unterschiedlich sind, mit mindestens einer der mindestens zwei Schichten mit einer Reißdehnung von größer 30% gemäß DIN 53430, und die jeweils im Mittel 75 bis 98% offene Zellen gemäß DIN ISO 4590-86 aufweisen, und welche gegebenenfalls eine adhäsive Verbindungsschicht zwischen den mindestens zwei Schichten aufweisen, wobei
A) mindestens eine der mindestens zwei Schaumstoffschichten aus einem irreversibel thermoformbaren, harten Isocyanat basiertem Schaumstoff mit einer Dichte nach DIN 53420 von 10-45 kg/m³ und einer Druckfestigkeit bei 10% Stauchung nach DIN EN 826 von 30-200 kPa besteht, wobei die Schaumstoffschicht A) erhältlich ist aus der Reaktion der Komponenten bestehend aus
i) einer Polyolkomponente bestehend aus
a. 15-60 Gew.-%, bezogen auf die Gesamtmenge der Isocyanatreaktiven Komponenten der Polyolkomponente i), Polyetherpolyol mit 10-50 Gew.-% Ethylenoxid-Anteil, mit einem zahlenmittleren Äquivalentgewicht von 500-2500 g/mol und einer Funktionalität von 2 bis 8,
b. 30-70 Gew.%, bezogen auf die Gesamtmenge der Isocyanatreaktiven Komponenten der Polyolkomponente i), Polyetherpolyol mit einem zahlenmittleren Äquivalentgewicht von 50-480 g/mol und einer Funktionalität von 2 bis 8
c. gegebenenfalls Kettenverlängerern und/oder Vernetzungsmitteln,
d. 1 bis 15 Gew.-%, bezogen auf die Gesamtmenge der Isocyanatreaktiven Komponenten der Polyolkomponente i), Wasser und gegebenenfalls weiteren Treibmitteln,
e. 0,3 bis 5 Gew.-%, bezogen auf die Gesamtmenge der Isocyanatreaktiven Komponenten der Polyolkomponente i), Katalysatoren,
f. gegebenenfalls Hilfs- und/oder Zusatzstoffen,
ii) und einer Isocyanatkomponente enthaltend
g. 55 bis 100 Gew.-%, bezogen auf die Isocyanatkomponente ii), difunktionelle Diphenylmethandiisocyanate (MDI) mit einem Isomeren-Gewichtsverhältnis von 4,4'-MDI zu 2,4'-MDI von 1:1 bis 7:1,
h. 0 bis 45 Gew.-%, bezogen auf die Isocyanatkomponente ii), höhere Homologe des Diphenylmethandiisocyanates (MDI),
B) die mindestens zwei Schaumstoffschichten nach ISO 10543 (Kund'sches Rohr) im Bereich von 315-6350 Hz bei 1 cm Schichtdicke jeweils mindestens eine mittlere Schallabsorption von 20% aufweisen.

2. Verwendung der Verbundelemente gemäß Anspruch 1 zur Herstellung von schallabsorbierenden Paneelen.
